# EUROPEAN PATENT APPLICATION

(11) **EP 4 550 931 A1**
(43) Date of publication of application: **07.05.2025**
(21) Application number: 23207895.6
(22) Date of filing: 06.11.2023
(51) Int. Cl.: H05B 6/06, H02M 1/34

(54) **INDUCTION HOB**

(71) Applicant: ELECTROLUX APPLIANCES AKTIEBOLAG, 105 45 Stockholm (SE)
(72) Inventor: VIROLI, Alex, 47122 Forli (IT); NOSTRO, Massimo, 47100 Forli (IT); ZANGOLI, Massimo, 47100 Forli (IT); SCHIARATURA, Elia, 47100 Forli (IT); Baldazzi, Alessio, 4711 Forli (DE)
(74) Representative: Electrolux Group Patents

(57) **Abstract**

An induction heating hob (1) comprising an induction load (3) and a power converter (100) which is configured to provide an electric power to the induction load (3). The power converter (100) comprises a converter circuit (8), and a converter control module (9) which controls the converter circuit (8) for regulating the electric power supplied to the induction load (3). The converter circuit (8) comprises a switching circuit which is provided with a couple of converter switches (11)(12) which are connected in series to each other by a first node (17) connected to a first terminal of the induction load (3) by a converter line (24). The converter circuit (8) further comprises a snubber circuit (38) which is provided with a couple of snubber capacitors (21)(22) which are connected in series to each other by a second node (23) connected to the converter line (24), and a couple of damping circuits (25)(26), which are connected both in parallel to the snubber capacitors (21)(22) and to the converter switches (11)(12), respectively.

## Description

### TECHNICAL FIELD

The present invention generally concerns to the technical field of induction hobs. More specifically, the invention concerns to an electric power converter configured to supply high-frequency power to a heating coiling of an induction hob.

### PRIOR ART

Induction hobs for preparing food are well known in prior art and typically comprise heating zones which are associated with induction loads. For heating a piece of cookware placed on a heating zone, the induction load is electrically coupled with electronic driving units for driving an alternating current through the induction load. The alternating current generates a time varying magnetic field. Due to the inductive coupling between the induction loads and the piece of cookware placed above the induction load, the magnetic field generated by the induction load causes eddy currents circulating in the piece of cookware.

The presence of eddy currents generates heat within the piece of cookware due to the electrical resistance of the piece of cookware.

It is also known that electronic driving units of induction hobs generally comprises electric power converters comprising switching devices, such as fast switching insulated-gate bipolar transistor (IGBT). Insulated-gate bipolar transistor are affected by voltage overshoot because the stored energy in stray inductance is rapidly released during their switching.

A technical problem of induction hobs is that when the voltage overshoot leads to overshoot voltages outside operating ranges of electronic components of electric power converters, the latter tend to be damaged.

In the light of that some proposed solutions envisage to use in electric power converters, circuits being configured to reduce the stray inductances, e.g., by using laminated copper plates in printed circuit boards. Besides stray inductances, however, electric induction hobs remain partially affected by the voltage overshoot because of their inductive loads.

In order to reduce the voltage overshoots, the electric power converters of known induction hobs comprise so called snubber circuits having architectures which depend on the kind of electric components to be protected.

Some known snubber circuits for diode comprises circuits provided with capacitors and a resistor, i.e. a RC circuits, which attenuate overvoltage spikes which arise during reverse recovery processes, but have some technical problems.

Indeed, capacitors causes voltage and current oscillations, i.e. the so called "ringing" noise. Such noise flows through the printed circuit board causing electromagnetic compatibility (EMC) problems especially for circuits and appliances which are electrically connected with the printed circuit board.

Moreover, resistors in induction hobs having RC snubbers operates in high frequencies switching conditions and lead to a high power dissipation.

### DESCRIPTION OF THE INVENTION

The aim object of the present invention is therefore to provide an electric power converter with one or more snubber circuits, which mitigates at least some of the disadvantages of electric power converters with snubber circuits as known in the prior art.

In accordance with this object, according to the present invention, it is provided an induction heating hob comprising at least an induction load and at least a power converter, which is configured to provide an electric power to said induction load and comprises at least a converter circuit and at least a converter control module which is configured to control said converter circuit by at least a control signal in order to regulate the electric power supplied to said induction load, wherein said converter circuit comprises: at least a switching circuit which is provided with at least a converter switch, which is controlled by said control signal and is connected to a first terminal of said induction load by a converter line, and at least a snubber circuit comprising at least a damping circuit which is connected in parallel to said converter switch.

It is important to point out that the reduced ringing in amplitude and time will reduce the EMC emission measured through the tests as standards allowing competitive advantage using simpler and cheaper input filter.

Preferably the damping circuit is connected in parallel to said snubber capacitor.

Preferably said switching circuit is provided with a couple of converter switches, which are selectively controlled by said control signals and are connected in series to each other by said first node connected to said first terminal of said induction load by said converter line, said snubber circuit is provided with a couple of snubber capacitors which are connected in series to each other by a second node connected to said converter line, and a couple of damping circuits, which are connected both in parallel to said snubber capacitors and to said converter switches, respectively.

Preferably, said couple of converter switches comprise a high side switch and a low side switch which are connected in series to each other, between a first supply line having a high voltage and a second supply line having a low voltage, said high side switch and said low side switch being connected to each other by said first node, said snubber circuit comprises a high side snubber capacitor and a low side snubber capacitor which are connected in series to each other, and are connected in parallel to said high-side switch and respectively to said low side switch, said couple of damping circuits comprise a high side damping circuit connected in parallel to said high side switch and said high side snubber capacitor, a low side damping circuit connected in parallel to said low side switch and said low side snubber capacitor.

Preferably, said damping circuit comprises a damping capacitor, a damping resistor, and a damping unidirectional current conduction device.

Preferably, the damping capacitor and the respective unidirectional current conduction device are connected in series to each other between said converter line and said first supply line or said second supply line.

Preferably, said damping resistor and the relative damping capacitor are connected in parallel to each other.

Preferably the damping unidirectional current conduction device comprises a first terminal connected to a respective damping resistor and a second terminal connected to said converter line.

Preferably, said switching circuit comprises only a single converter switch.

Preferably, said power converter is a half-bridge and comprise a single converter circuit.

Preferably said power converter is a full bridge converter and comprises two converter circuits having output terminals connected to each other respectively, and converter terminals which are connected to respective first and second terminals of said induction load.

Preferably, said power converter comprise three converter circuits which are connected to respective induction loads; each converter circuits being without said output terminals and being connected to the first terminal of said induction load by said converter terminal; the second terminal of said induction load being connected to second converter terminal induction load.

Preferably, said converter switches are insulated-gate bipolar transistor (IGBT) having respective anti-parallel diodes and/or field-effect transistors.

Preferably, the damping capacitor has a capacitance comprised from about 1 nano-Farad to about 1 micro-Farad, preferably from about 30 nano-Farad to about 500 nano-Farad.

Preferably, the damping resistor has a resistance comprised from about 0,2 Ohm to about 100 Ohm, preferably from about 0,8 Ohm to 20 Ohm.

If not explicitly indicated otherwise, embodiments of the invention can be freely combined with each other.

### BRIEF DESCRIPTION OF THE DRAWINGS

The various aspects of the invention, including its particular features and advantages, will be readily understood from the following detailed description and the accompanying drawings, in which:
Fig. 1 schematically illustrates an induction hob made according to the teaching of the present invention,
Fig. 2 shows a circuit of the converter circuit of an electrical power converter of the induction hob made according to a first embodiment of the present invention,
Fig. 3 shows a circuit of the converter circuit of an electrical power converter of the induction hob made according to a second embodiment of the present invention,
Fig. 4 shows a circuit of the converter circuit of an electrical power converter of the induction hob made according to a third embodiment of the present invention,
Fig. 5 shows a circuit of the converter circuit of an electrical power converter of the induction hob made according to a fourth embodiment of the present invention,
Fig. 6 shows a circuit of the converter circuit of an electrical power converter of the induction hob made according to a fifth embodiment of the present invention.

### PREFERRED EMBODIMENTS OF THE INVENTION

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

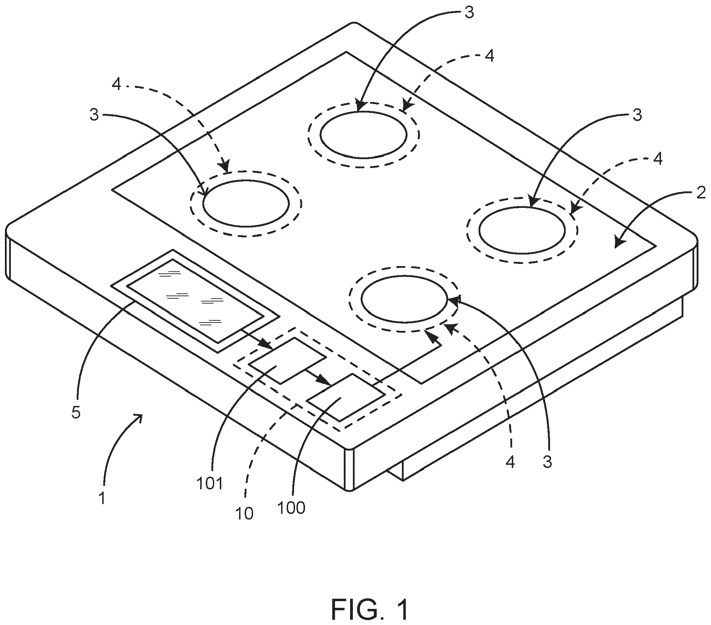

Figures 1-6 illustrate an induction heating apparatus made according to the present invention.

With reference to Figure 1, the heating apparatus comprises a induction hob 1 comprising a hob plate 2 and one or more heating zones 4 (shown by broken lines), which are arranged on the hob plate 2 and are structured in order to support respective cookware (not illustrated).

With reference to the exemplary embodiment shown in Figure 1, each heating zone 4 is associated with at least an induction load 3 configured to heat the cookware. Preferably, the induction load 3 may be arranged under the hob plate 2.

In the example shown in Figure 1, the induction hob 1 further comprises a user-interface 5 for example comprised in a control panel of the induction hob 1.

The user-interface 5 may be configured in order to allow users to input/set commands to the induction hob 1 to perform a cooking cycle.

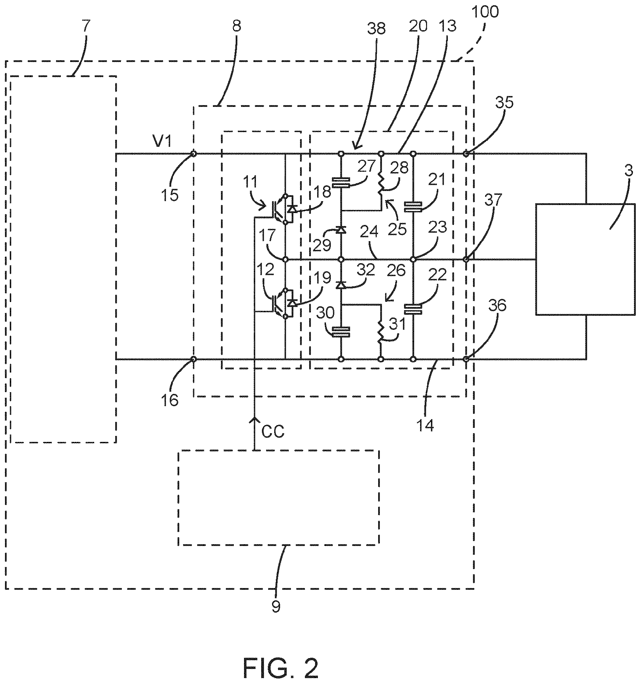

With reference to Figures 1 and 2, the induction hob 1 further comprises a control circuit 10 provided with an electric power converter 100 and electronic control unit 101.

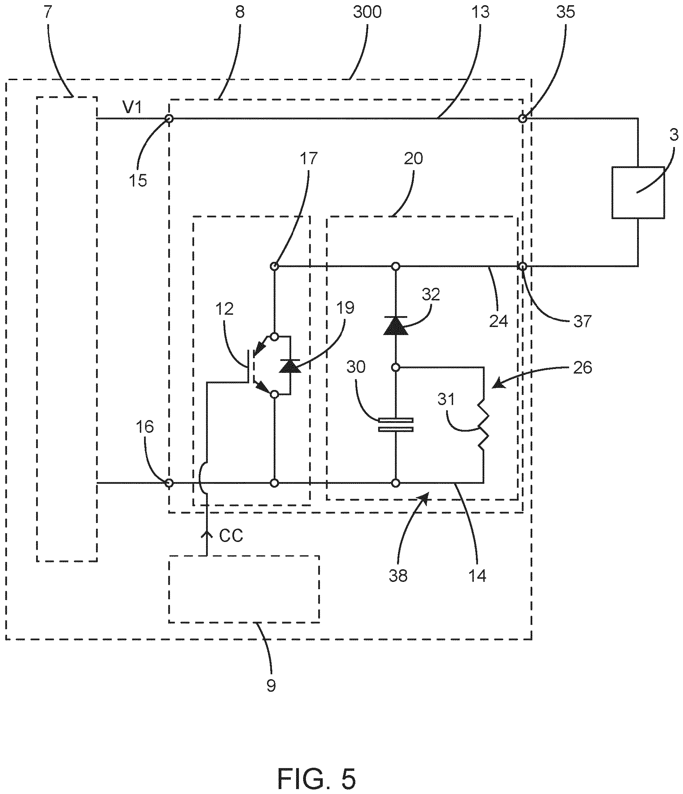

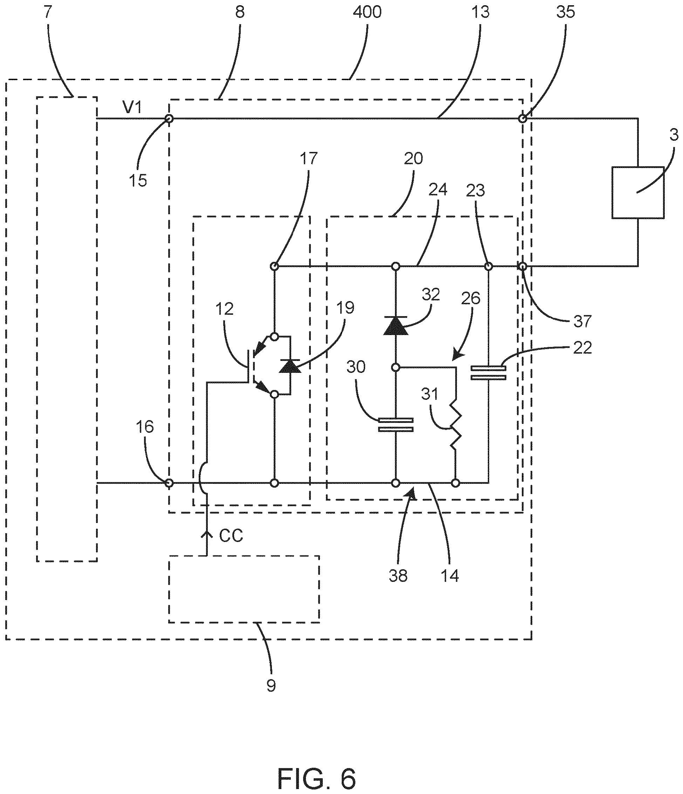

The electric power converter 100 is electrically connected to the induction load 3 and is configured to supply electric power to the induction load 3 itself. It is understood that the induction load 3 may comprise one or more induction coils (not illustrated). It is understood that the induction load 3 may further comprise one or more, preferably two, resonant capacitors (Figures 5 and 6).

The electronic control unit 101 is configured to control the electric power converter 100 in order to regulate by means of the latter, the heating power that induction load 3 provides to the cookware (not illustrated) while cooking.

Figure 2 is a circuit diagram showing the electric power converter 100 according to an embodiment of the present invention.

In the exemplary embodiment illustrated in Figure 2, the electric power converter 100 comprises a input stage 7, a converter circuit 8 and a converter control module 9 (inverter).

The input stage 7 is configured in order to provide a prefixed supply voltage V1 to the converter circuit 8. For example, the input stage 7 may be connected to a mains voltage (not illustrated), i.e. the alternating mains voltage (220 V), and be configured to rectify the mains voltage and outputs a direct supply voltage V1 having a prefixed value. The supply voltage V1 may be obtained for example by rectifying one or more phases of a single-phase or three-phases of an alternating voltage of the mains voltage.

The converter circuit 8 is configured to input the supply voltage V1 provided by the input stage 7 and supplies a high-frequency current to the heating coil 3 based on converter control signals CC.

The converter control module 9 is configured to control the converter circuit 8. Preferably, the converter control module 9 is configured to provide control signals CC to the converter circuit 8 in order to control the high frequency current to be supplied to the induction load 3.

With reference to the embodiment illustrated in Figure 2, the converter circuit 8 has an electronic architecture corresponding to a half-bridge converter circuit.

The converter circuit 8 comprises a first input terminal 15 and a second input terminal 16. In the example illustrated in Figure 2, the first input terminal 15 may have a first electric potential associated with the voltage V1 whereas the second input terminal 16 may be connected to a terminal (ground terminal) having a second potential lower than the first potential, i.e. a ground potential (V=0). Via the first input terminal 15 and the second input terminal 16, electric power is supplied by the input stage 7 to the converter circuit 8.

Preferably, in the example illustrated in Figure 2, the converter circuit 8 further comprises a first output terminal 35, a second output terminal 36, and a third output terminal 37. In Figure 2, the first output terminal 35 and the second terminal 36 are connected to first terminals of the induction load 3. The third terminal 37 is connected to a second terminal of the induction load 3.

According to the present invention, the converter circuit 8 may comprise a switching circuit provided with one or more converter switches.

Converter switches are configured to selectively and alternately switch-on and switch-off based on control signals CC generated by the converter control module 9. According to the embodiment illustrated in Figure 2, the converter circuit 8 comprises two converter switches.

As shown in the exemplary embodiment of Figure 2, the converter circuit 8 comprises a first converter switch 11 (high side switch) and a second converter switch 12 (low side switch), which are connected in series between a first line 13 and a second line 14 which are, in turn, connected to respective input terminals 15 and 16.

In the example shown in Figure 2, the first converter switch 11 and the second converter switch 12 are connected to each other by a node 17, which is connected in turn to the third output terminal 37 by a line 24.

Preferably, the first converter switch 11 and the second converter switch 12 may comprise insulated-gate bipolar transistors (IGBT).

In this case, the first converter switch 11 and the second converter switch 12 may be embodied such that their electric behaviour is controlled by gate drivers of the converter control module 9, operating on their respective gates, e.g., by setting gate-emitter voltages.

According to the example illustrated in Figure 2, the converter circuit 8 further comprises a first anti-parallel diode 18 and a second anti-parallel diode 19. The first anti-parallel diode 18 is connected in inverse-parallel to the first converter switch 11. The second anti-parallel diode 19 is connected in inverse-parallel to the second converter switch 12.

It is understood that insulated-gate bipolar transistors (IGBT) may only conduct current in a forward direction; the first anti-parallel diode 18 and the second anti-parallel diode 18 connected in inverse-parallel to the first converter switch 11 and second converter switch 12 are configured to supply negative current to the load through node 23 and protect the latter from damage caused by current flowing in a reverse direction.

Moreover, it is understood that the present invention is not limited to converter switches 11, 12 comprising insulated-gate bipolar transistors (IGBT), but in alternative, or in addition, according to different embodiment of the present invention, converter switches 11, 12 may comprise field-effect transistors, such as for example, metal-oxide-semiconductor field-effect transistors (MOSFETs) as MOS-controlled thyristors (MCTs) or as static induction thyristors (SITs).

The first converter switch 11 and the second converter switch 12 are configured to be alternately switched-on and switched-off, wherein the switch-on of the converter switch 11 occurs at the same time as a switch-off of the converter switch 12, and vice-versa.

Preferably, the first converter switch 11 and the second converter switch 12 may be alternatively switched-on and switched-off.

It is understood that symmetric conduction times of the first converter switch 11 and of the second converter switch 12 may lead to a maximized output power delivered to a induction load 3 connected to the converter circuit 8.

It is also understood that the first converter switch 11 and the second converter switch 12 may, however, also be controlled based on asymmetrically switched-on and switched-off.

As illustrated in Figure 2, the converter circuit 8 further comprises a snubber circuit 20.

According to the exemplary embodiment of Figure 2, the snubber circuit 20 comprises two snubber capacitors 21 and 22.

The snubber capacitors 20 and 21 are connected in series to each other between the first line 13 and the second line 14 via a node 23 which is connected in turn to the node 17 and to the third output 37 by a line 24.

In detail, the voltage V1 at the first line 13 is approximately equal to a voltage at the first input terminal 15; the voltage at the second line 14 is approximately equal to the voltage at the input terminal 16, while the voltage at the line 24 and third output terminal 37 is equal to a voltage V3 at the node 23. It is understood that the voltage V3 at a node 23 is controlled by switching patterns (controlled using gate drivers) of the first converter switches 11 and 12, the snubber circuit 20 and a supply voltage V1 provided at the first input terminal 15.

Preferably, the first snubber capacitor 21 and the second snubber capacitor 22 may have a capacitance comprises from about 10 nano-Farad (10⁻⁹ Farad) to about 47 nano-Farad (nF), preferably from about 10 nano-Farad to about 33 nano-Farad (nF) According to the present invention, the snubber circuit 20 further comprises a damping circuit 38.

According to the exemplary embodiment illustrated in Figure 2, the damping circuit 38 comprise a high side damping circuit 25 and a low side damping circuit 26.

The high side damping circuit 25 is connected in parallel to the snubber capacitor 21, and in parallel to the first converter switch 11.

The low side damping circuit 26 is connected in parallel to the snubber capacitor 22, and in parallel to the second converter switch 12.

As illustrated in the exemplary embodiment of Figure 2, the damping circuit 25 comprises a damping capacitor 27, a damping resistor 28, and a damping unidirectional current conduction device, being preferably a damping diode 29.

According to the exemplary embodiment illustrated in Figure 2, the damping capacitor 27 and the damping diode 29 are connected in series between the line 13 and the line 24.

In Figure 2, the damping diode 29 comprises a cathode connected to the damping capacitor 27 and the anode connected to the node 23 via the line 24. The damping resistor 28 is connected in parallel to the damping capacitor 27.

It is understood that the present invention is not limited to series connection between the damping diode 29 and the damping capacitor 27 in the order described above but such series connection can be reversed.

With reference to the low side damping circuit 26, it comprises a damping capacitor 30, a damping resistor 31, and a unidirectional current conduction device, being preferably a damping diode 32.

The damping capacitor 30 and the damping diode 32 are connected in series between the line 24 and the line 14.

In the exemplary embodiment of Figure 2, the damping diode 32 comprises an anode connected to the damping capacitor 30 and the cathode connected to the node 23 via the line 24. The damping resistor 31 is connected in parallel to the damping capacitor 30.

It is understood that the present invention is not limited to series connection between the damping diode 32 and the damping capacitor 30 in the order described above but such series connection can be reversed.

Preferably, the first damping capacitor 27 and the second damping capacitor 30 may have a capacitance comprised from about 1 nano-Farad to about 1 micro-Farad, preferably from about 30 nano-Farad to about 500 nano-Farad.

Preferably, the first damping resistor 28 and the second damping resistor 31 may have a resistance comprised from about 0,2 Ohm to about 100 Ohm, preferably from about 0,8 Ohm to 20 Ohm.

Conveniently, the first snubber capacitor 21 and the second snubber capacitor 22 of the snubber circuit 20 being connected in parallel to the first converter switch 11 and respectively to the second converter switch 12, and being connected one to the other by the node 23, causes the first converter switch 11 and the second converter switch 12 to perform a soft switching, which mitigates large voltage transients after fast switching, thereby helping to protect the converter circuit 8 from damages. In other words, the soft switching conveniently causes, on the one side, a reduction of the losses, and on the other side, protects the circuit from damages.

Applicant has found that the snubber capacitors 21 22 implements a "Zero Voltage Switching". In detail, test performed by Applicant proved that without snubber capacitors 21 22, there is a hard switching during the turn off where the switch has to withstand to high voltage and high current simultaneously leading a high power dissipation on the power switch.

More in detail, with the snubber capacitors 21 22, during the turn off the voltage is kept constant so there is high current but low voltage reducing a lot the power dissipation on the switch device. The technical effect obtained by connecting the high side damping circuits 25 and the low side damping circuit 26 in parallel to the snubber capacitors 21 and 22 and to the first and second switching devices 11 and 12 is to functionally decouple both damping circuits 25, 26 from overshoot mitigation which are caused by the first and second snubber capacitors 21 and 22.

Indeed, high side damping circuits 25 and the low side damping circuit 26 operate based on voltage ranges which correspond to (maximal) differences between overshoot/undershoot voltages and the supply voltage V1 (level/ground) provided via the first input terminal 15 and the second input terminal 16, while the first and second snubber capacitors 21 and 22 may be configured to operate based on the supply voltage V1. In this way, low-voltage damping capacitors 27 and 30 may be selected for both high side and low side damping circuits 25 and 26, thereby conveniently reducing size and cost of latter.

It is important to point out that the voltage is the same (supply voltage V1 +over/undershoot) for snubber capacitors 21, 22 and dumping circuits 25, 26. The advantage is inside the dumping network: dumping capacitors 27, 30 and dumping resistors 28, 31 operate to over/undeshoot voltage only while the dumping diodes withstand to the supply voltage V1. More in detail, both dumping circuit 25 and 26 operate at maximum voltage (supply voltage V1 + overshoot, overshoot is much smaller compared to supply voltage V1, so it's not a big mistake to neglect the overshoot), it's the same maximum voltage as power switch 11 12 and snubber capacitors 21 22.

Inside the dumping network, during the idle state (diode in reverse, phase one) the diode 29 32 will withstand to the maximum voltage and in the same phase the voltage applied to capacitors 27 30 and resistors 28 31 is 0 V.

During the second and third phase of the dumping network, the maximum voltage applied to the capacitors 27 30 and resistors 28 31 is the overshoot voltage only (it's reached during the transition between second and third phase).

The overshoot voltage is much smaller compared to V1 so it's possible to use low voltage capacitors. The advantage is that it's possible to use ceramic capacitors, that are suitable for high frequency, and it's possible to use big capacitance with small case size and low cost of the component. Indeed high voltage ceramic capacitor are available but are bigger and costs more compared to low voltage ceramic capacitor. Moreover, the first and second snubber capacitors 21 and 22 advantageously enable soft switching of the first and second converter switches 11 and 12. Conveniently, the high side and low side damping circuits 25 and 26 may comprise passive electronic components. Conveniently, the high side and low side damping circuits 25 and 26 enable ringing mitigation through the damping circuits 25 and 26 themselves. Conveniently, the first damping capacitor 27 and the second damping capacitor 30 are embodied as low-voltage capacitors configured to withstand a maximum overshoot voltage respectively a maximum undershoot voltage.

The operation of the induction hob 1 having the above-described configuration will be described below with reference to Figure 2.

During the operation, the converter control module 9 selectively controls the first converter switch 11 and the second converter switch 12 in order to cause them to alternately switch-on and switch-off based on frequency, which depend on the prefixed current frequency.

In Figure 2, when the first converter switch 11 (high-side switch) is switched-on and the second converter switch 12 (low-side) switch is switched-off, the current flowing through the heating coil inductance and the load resistance of the load 3 connected to the electric power converter 100 may increase.

When the first converter switch 11 is switched-off, current may flow through the heating coil inductance 3 (the load resistance) and the snubber circuit 20 reducing undershoot voltage and ringing.

Similar considerations applies, vice-versa, when the first converter switch 11 is switched-off, and the second converter switch 12 is switched-on.

After such switching operations, the voltage at the second output terminal 37 gradually decrease/increase to ground/the supply voltage V1 through the first snubber capacitor 21 and the second snubber capacitor 22 and subsequently undershoot/overshoot. Gate driver timing and dimensioning of the first damping capacitor 27, the first damping diode 29, the first damping resistor 28 and of the second damping capacitor 30, the second damping diode 32, the second damping resistor 31 may be such that ringing is reduced sufficiently.

The operation of damping circuit 38 of the converter circuit 8 may be described by supposing three phases depending on the status/operation of damping diodes 29 and 32 and status/operation of damping capacitors 27 and 30.

Damping circuit 38 is in a first phase, when a damping diode 29 or 32 is reverse biased and the relative damping capacitor 27 or 31 is discharged.

In the first phase, the damping resistors 28, 31 keeps the damping capacitor 27, 30 at 0 V, while the damping diodes 29,32, withstand all the supply voltage V1. In particular the damping diode 32 is off.

When the first or second converter switch 11, 12 switches-off leading to the transition of voltage at the node 23, the damping circuit 38 remains in the first phase.

It is understood that when the first damping diode 29 is in a reverse-biased state and the damping circuit 38 is in a steady state in which the first damping capacitor 27 is substantially discharged, substantially no current may flow through the first damping resistor 28 and voltage at the first damping capacitor 27 may be at zero Volt.

Vice-versa when the second damping diode 32 is in a reverse-based state and the damping circuit 38 is in a steady state in which the second damping capacitor 30 is substantially discharged, substantially no current may flow through the second damping resistor 31 and voltage at the second damping capacitor 30 may be at zero Volt.

The damping circuit 38 conveniently mitigates the ringing by the subsequent iteration between the second phase and the third phase.

Damping circuit 38 is in a second phase when a damping diode 29 or 32 is forward biased. In detail the damping circuit 38 will go to the second phase when the voltage of the node 23 completes the transition to supply voltage or ground voltage, then it will overshoot or undershoot. For example, after the transition from high voltage V1 to zero voltage, the node 23 will undershoot below 0 V.

In this condition the low side damping circuit 26 which is parallel to the second converter switch 12, changes from the first phase to the second phase wherein the damping diode 32 is forward biased and the damping capacitor 30 is charged at the undershoot voltage level.

Vice-versa, after the transition from 0 V to high voltage V1, the node 23 will overshoot above the supply voltage V1 and the high side damping circuit 25 parallel to the first converter switch 11 changes from the first phase to the second phase and charges the damping capacitor 27. During the second phase, the first damping diode 29 is forward-biased and the first damping capacitor 27 is charged by the temporary overshoot voltage above the Voltage V1.

Damping circuit 38 is in a third phase, when a damping diode 29 or 32 is reverse biased and the relative damping capacitor 27, 30 is charged. In detail, in such phase the damping capacitor 32 is off.

Once the damping capacitor 27 is charged at the maximum overshoot voltage, the node 23 oscillates biasing the damping diode in reverse voltage.

At this state, the damping circuit 38 will move to third phase where the damping capacitor 27 is charged and the damping diode 29 is reverse biased. During the third phase the damping resistor 28 discharges the damping capacitor 27 dissipating the stored energy. In detail the first damping diode 29 is reverse-biased and the first damping capacitor 27 is discharged by the first damping resistor 28.

After a completion of the second phase and the third phase, the temporary overshoot voltage in a subsequent second phase is smaller than in the previously completed second phase.

It is understood that during the oscillation of the voltage at the node 23, the damping circuit 38 will repeat the second and third phases until the ringing is small enough to not be able to forward bias the damping diode 29.

Damping circuit 38 mitigates the ringing by an iteration between a second phase and a third phase of the three operative phases, wherein: in the dead time interval after both a switching off of the first and second converter switches 11 and 12 and a subsequent switching-on of the first converter switch 11; the snubber capacitors 21 and 22 provides a current to the node 23 until the anti-parallel diode 18 of the first converter switch 11 is forward-biased and until the voltage V3 at the node 23 reaches the supply voltage V1 and starts the ringing of the node 23.

When the oscillation of voltage at the node 23 ends and the snubber circuit 20 is in the third phase, the damping resistor 28 completely discharges the damping capacitor 27 bringing back the damping circuit 38 to the first phase.

The damping circuit 38 is in the first phase before the new transition of the same polarity to have the functionality ready again.

In the third phase, the damping circuit 38, the first damping resistor 28/the second damping resistor 31 advantageously only dissipates a small amount of electric power as the electric energy stored in the first damping capacitor 27/the second damping capacitor 30 is small as it essentially related to an overshoot/undershoot voltage. Being in the third phase, the damping circuit 38 stops the iteration between the second phase and the third phase when the temporary overshoot voltage or the temporary undershoot voltage is too small to forward-bias the first damping diode 29 or the second damping diode 32, respectively.

After the overshoot, the damping circuit 38 mitigates the ringing by the subsequent iteration between the second phase and the third phase, wherein in the second phase, the damping diode 32 is forward-biased, and the damping capacitor 30 is charged by a temporary undershoot voltage below the supply voltage.

The damping circuit 38 mitigates ringing after a switching of the first converter switch 11 and/or of the second converter switch 12, and the first snubber capacitor 21 and the second snubber capacitor 22 are configured to reduce the losses on the first converter switch 11 and/or of the second converter switch 12.

The electric power converter made according to the present invention has many advantages: the snubber capacitor for soft switching off aid keeps low the losses of the IGBT during turn off while the damping network reduces the maximum overshoot and the following ringing time. The capacitor of the damping network needs low maximum voltage rating: it should withstand only to the overshoot/undershoot voltage. The power dissipation on the resistor is low: it should dissipate only the energy stored in the capacitor during the overshoot/undershoot. The reduced ringing in amplitude and time will reduce the EMC emission measured through the tests as standards allowing competitive advantage using simpler and cheaper input filter.

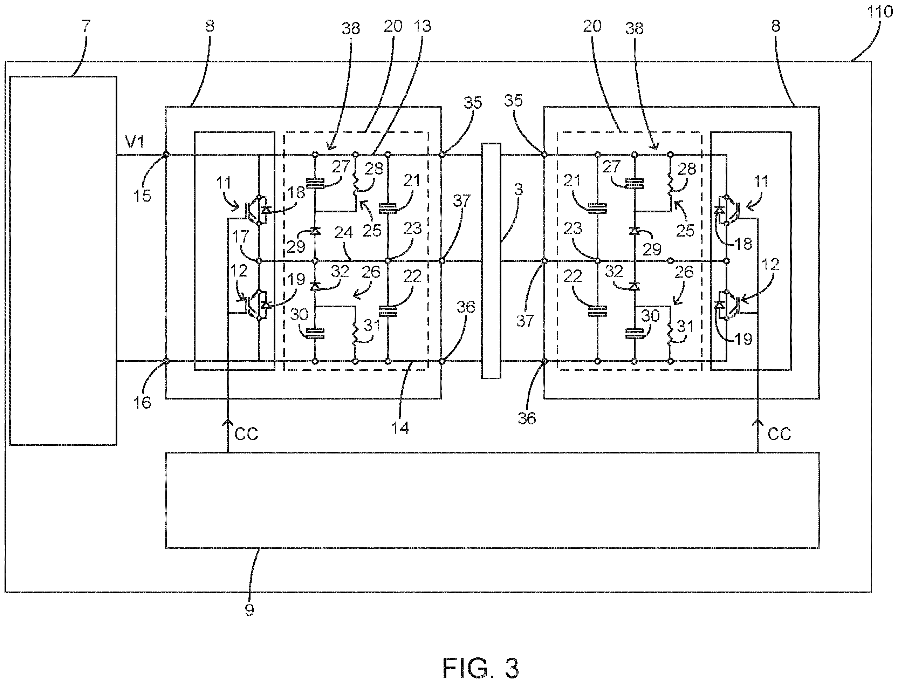

The embodiment shown in Figure 3 relates to an electric power converter 110, which is similar to the electric power converter 100 shown in Figure 2, and the parts of which will be identified, where possible, with the same reference numerals as mark corresponding parts of the electric power converter 110.

The electric power converter 110 differs from the electric power converter 100 in that it comprises two converter circuits 8 which are symmetrically connected one to the other in order to form a full bridge" circuit (topology) which is connected to an induction load 3.

In detail, according to the embodiment illustrated in Figure 3, the first output terminal 35 of the first converter circuit 8 is connected to the first output terminal 35 of the second converter circuit 8, the second output terminal 36 of the first converter circuit 8 is connected to the second output terminal 36 of the second converter circuit 8, the third output terminal 36 of the first converter circuit 8 is connected to a first terminal of the induction load 3, and the third output terminal 36 of the second converter circuit 8 is connected to the second terminal of the induction load 3.

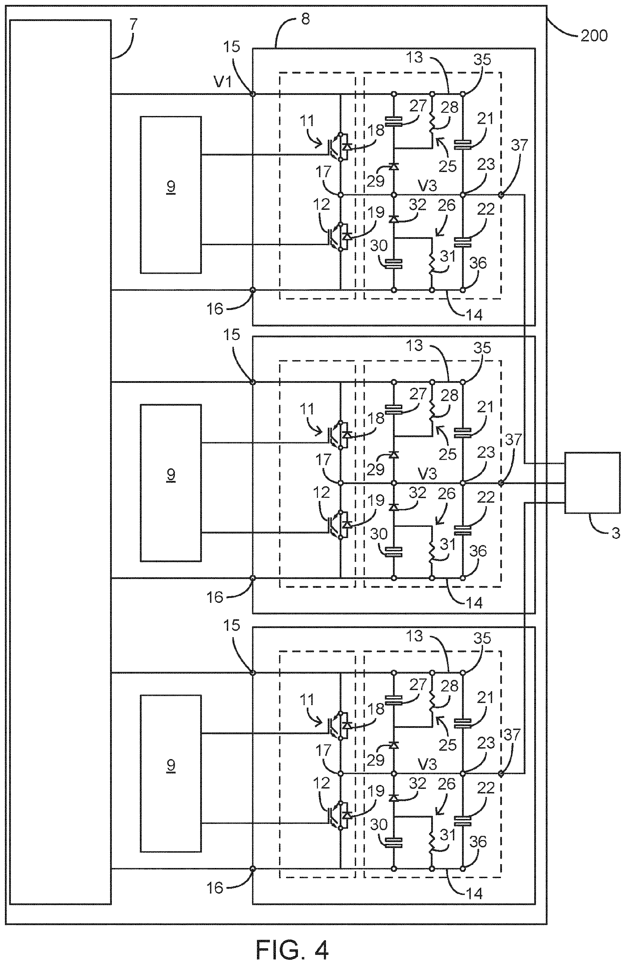

The embodiment shown in Figure 4 relates to an electric power converter 200 which differs from the electric power converter 100 in that it comprises three converter circuits 8, which are controlled by respective converter control modules 9 and provide powers to as many inductive coils 3.

In detail, in the exemplary embodiment illustrated in Figure 4, the electric power converter 200 comprise three converter circuits 8 configured to provide the power supplied to three inductive loads 3. In detail, in the exemplary embodiment of Figure 4, each inductive load 3 comprise a first terminal connected to the third output terminal 37 of a respective converter circuit 8 and a second terminal which is connected to the second terminal of the other induction loads 3. The terminal 35, and 36 of the converter circuits are open.

The present invention is helpful to reduce the EMC conducted emission according to CISPR 14-1 standard or equivalent.. The snubber circuit is configured to soft switching aid (to keep low the losses of the IGBT). Moreover, the circuit allows the use of cheaper components versus current design and eventual external harness filter, reducing emission at critical frequencies.

The reduced ringing in amplitude and time will reduce the EMC emission measured through the tests as standards allowing competitive advantage using simpler and cheaper input filter.

In detail, the snubber capacitor for soft switching off aid keeps low the losses of the IGBT during turn off while the damping network reduces the maximum overshoot and the following ringing time. The capacitor of the damping network needs low maximum voltage rating: it should withstand only to the overshoot voltage. The power dissipation on the resistor is low: it should dissipate only the energy stored in the capacitor during the overshoot.

Clearly, changes and variations may be made to the induction hob departing from the scope of the present invention.

The embodiment shown in Figure 5 relates to an electric power converter 300 which differs from the electric power converter 100 of the embodiment shown in Figure 2 in that comprise a converter circuit 8 having a "single switch" topology, and a single snubber circuit 26.

Moreover, electric power converter 300 shown in Figure 5 differs from the electric power converter 100 of the embodiment shown in Figure 2 in that the converter circuit 8 is without snubber capacitors 21 and 22.

More in detail, in the exemplary embodiment of Figure 5, the converter circuit 8 comprises a single converter switch 12 (low side switch of Figure 2), which is connected to the input terminal 16. The converter switch 12 is connected to the node 17, which is connected in turn to the output terminal 37 by the line 24.

According to the example illustrated in Figure 5, the converter circuit 8 further comprises the anti-parallel diode 19.

The converter circuit 8 is provided with the snubber circuit 20 which does not comprise the snubber capacitor 22.

According to the example illustrated in Figure 5, the snubber circuit 20 comprises the damping circuit 26, which is provided with the damping capacitor 30, the damping resistor 31, and the unidirectional current conduction device, being preferably a damping diode 32.

The embodiment shown in Figure 6 relates to an electric power converter 400 which differs from the electric power converter 300 of the embodiment shown in Figure 5 in that comprise a converter circuit 8 comprising a snubber capacitor 22.

More in detail, in the exemplary embodiment of Figure 6, the converter circuit 8 comprises the single converter switch 12 (low side switch of Figure 2), which is connected to the input terminal 16. The converter switch 12 is connected to the node 17, which is connected in turn to the output terminal 37 by the line 24.

According to the example illustrated in Figure 6, the converter circuit 8 further comprises the anti-parallel diode 19. The converter circuit 8 is provided with the snubber circuit 20 which comprise the snubber capacitor 22.

According to the example illustrated in Figure 6, the snubber circuit 20 comprises the damping circuit 26, which is provided with the damping capacitor 30, the damping resistor 31, and the unidirectional current conduction device, being preferably a damping diode 32. The damping circuit 26 is connected in parallel to the snubber capacitor 22, and in parallel to the converter switch 12.

## Claims

1. An induction heating hob (1) comprising at least an induction load (3) and at least a power converter (100)(110)(200)(300)(400), which is configured to provide an electric power to said induction load (3) and comprises at least a converter circuit (8) and at least a converter control module (9) which is configured to control said converter circuit (8) by at least a control signal (CC) in order to regulate the electric power supplied to said induction load,
wherein said converter circuit (8) comprises:
at least a switching circuit which is provided with at least a converter switch (11)(12), which is controlled by said control signal (CC) and is connected to a first terminal of said induction load (3) by a converter line (24), and
at least a snubber circuit (20) comprising at least a damping circuit (25)(26) which is connected in parallel to said converter switch (11)(12).

2. An induction heating hob according to claim 1, wherein said damping circuit (25)(26) comprises a damping capacitor (27)(30), a damping resistor (28)(31), and a damping unidirectional current conduction device (29)(32).

3. An induction heating hob according to claim 2, wherein said snubber circuit (20) comprises at least a snubber capacitor (21)(22).

4. An induction heating hob according to claim 3,wherein said damping circuit (25)(26) is connected in parallel to said snubber capacitor (21)(22).

5. An induction heating hob (1) according to any of the previous claims, wherein said switching circuit is provided with a couple of converter switches (11)(12), which are selectively controlled by said control signals (CC) and are connected in series to each other by said first node (17) connected to said first terminal of said induction load (3) by said converter line (24),
said snubber circuit (38) is provided with a couple of snubber capacitors (21)(22) which are connected in series to each other by a second node (23) connected to said converter line (24),
and a couple of damping circuits (25)(26), which are connected both in parallel to said snubber capacitors (21)(22) and to said converter switches (11)(12), respectively.

6. An induction heating hob according to claim 5, wherein:
said couple of converter switches (11)(12) comprise a high side switch (11) and a low side switch (12) which are connected in series to each other, between a first supply line having a high voltage and a second supply line having a low voltage, said high side switch and said low side switch being connected to each other by said first node (17),
said snubber circuit (20) comprises a high side snubber capacitor (21) and a low side snubber capacitor (22) which are connected in series to each other, and are connected in parallel to said high-side switch (11) and respectively to said low side switch (12),
said couple of damping circuits (25)(26) comprise a high side damping circuit (25) connected in parallel to said high side switch (11) and said high side snubber capacitor (21), a low side damping circuit (26) connected in parallel to said low side switch (12) and said low side snubber capacitor (22).

7. An induction heating hob according to claim 2, wherein said damping capacitor (27)(30) and the respective unidirectional current conduction device (29)(32) are connected in series to each other between said converter line (24) and said first supply line (13) or said second supply line (14).

8. An induction heating hob according to claims 2 or 7, wherein said damping resistor (28)(31) and the relative damping capacitor (27)(30) are connected in parallel to each other.

9. An induction heating hob according to claim 2, wherein the damping unidirectional current conduction device (29)(32) comprises a first terminal connected to a respective damping resistor (28)(31) and a second terminal connected to said converter line (24).

10. An induction heating hob according to claim 1, wherein said switching circuit comprises only a single converter switch.

11. An induction heating hob according to claim 1, wherein said power converter (100) is a half-bridge and comprise a single converter circuit (8) having output terminals (35, 36) connected to the load.

12. An induction heating hob according to claim 1, wherein said power converter is a full bridge converter and comprises two converter circuits (8) having output terminals (35)(36) connected to each other respectively, and converter terminals (37) which are connected to respective first and second terminals of said induction load (3).

13. An induction heating hob according to claim 11, wherein said power converter comprise three converter circuits (8) which are connected to respective induction loads (3); each converter circuits (8) being without said output terminals (35)(36) and being connected to the first terminal of said induction load (3) by said converter terminal (37); the second terminal of said induction load (3) being connected to second converter terminal (37)induction load.

14. An induction heating hob according to any of the foregoing claims, wherein said converter switches (11)(12) are insulated-gate bipolar transistor (IGBT) having respective anti-parallel diodes (18)(19) and/or field-effect transistors.

15. An induction heating hob according to claim 2, wherein said damping capacitor (27)(30) has a capacitance comprised from about 1 nano-Farad to about 1 micro-Farad, preferably from about 30 nano-Farad to about 500 nano-Farad.

16. An induction heating hob according to claim 2, wherein said damping resistor (28)(31) has a resistance comprised from about 0,2 Ohm to about 100 Ohm, preferably from about 0,8 Ohm to 20 Ohm.
